# EUROPEAN PATENT SPECIFICATION

(11) **EP 3 703 904 B1**
(45) Date of publication and mention of the grant of the patent: **21.06.2023**
(21) Application number: 18825796.8
(22) Date of filing: 12.12.2018
(51) Int. Cl.: B23Q 11/10, B23C 5/28, B23G 1/46

(54) **MACHINE CUTTING TOOL AND COOLING METHOD**
SCHNEIDWERKZEUG UND KÜHLVERFAHREN DAFÜR
OUTIL DE COUPE ET PROCÉDÉ DE REFROIDISSEMENT DE CELUI-CI

(30) Priority: 27.12.2017 IT 201700149840
(43) Date of publication of application: 09.09.2020
(73) Proprietor: 3D Studio Engineering S.r.l., 25069 Villa Carcina (BS) (IT)
(72) Inventor: CATTALINI, Gianluigi, 25069 Villa Carcina (BS) (IT)
(74) Representative: Biesse S.r.l.
(86) International application number: PCT/IB2018/059913
(87) International publication number: WO 2019/130142

(56) References cited:
- DE-A1-102013 003 291
- JP-A- H04 111 708
- US-A1- 2003 095 841
- US-A1- 2014 212 234

## Description

### Field of the Invention

The present invention concerns a cutting tool of the type used in machine tools for boring, milling, threading, tapping or drilling, and a method allowing the optimal cooling of the tool by means of a cooling fluid during a processing.

### State of the Art

In the sector of machining with machine tools, the use of a great number of specific cutting tools for each operation to be carried out is known, for example for boring, milling, threading, tapping or drilling. In general, the tools are provided with a shank, which allows them to be mounted on a machine tool through a spindle, and with one or more cutting edges, i.e. one or more cutting surfaces. The machine tool operates so that to push the cutting edges of the tool against the material of the raw piece being processed in order to remove material, for example for removing a chip.

Most cutting tools are rotated on their own longitudinal axis; in other words, most cutting tools are constituted by rotary tools: bits, millers, reamers, tappers, etc.

In the processing of ferrous, non-ferrous, composite or ceramic pieces, the friction generated between the cutting edges of the tool and the raw piece generates high heat, so high as to easily compromise the integrity of the tool itself. For this reason, machine tools provided with tool lubricating and cooling systems have been diffused for some time now. Such systems are configured to direct a cooling fluid in the zone where the cutting edges of the tool are operating. Oils emulsified with water, air and water are examples of cooling fluids. Oils emulsified with water are widely diffused because they simultaneously carry out the lubricating and cooling operations.

A generic cooling fluid will be referred to henceforth for convenience, further considering the possibility that such fluid is also a lubricant.

Generally, the cooling systems that use liquids comprise a cooling liquid collection tank, nozzles that can be oriented towards the cutting tool, a pump that collects the cooling liquid from the tank or that supplies it to the nozzles and a cooling liquid recovery system downstream from the zone where the tool is operating.

Some processes put a strain on cutting tools, despite the availability of the cooling fluid. These concern applications for which it is difficult or impossible to effectively direct the cooling fluid towards the cutting edges of the tool: for example, in small blind holes in milling, boring, tapping, drilling processes, etc. In fact, in this circumstance, the cutting tool occupies the hole, thus limiting or preventing the flow of the cooling fluid.

Therefore, hollow cutting tools, i.e. provided with one or more through-holes that operate to channel the cooling fluid towards the cutting edges, have been suggested for these types of applications. The holed tool is constrained to the spindle of the machine tool. The cooling fluid, for example a liquid, is supplied under pressure to the spindle by an appropriate circuit of the machine tool; from the spindle, the cooling fluid flows through the shank of the tool, passing just in the holes provided for this purpose, and coming out at the cutting edges of the tool.

The Applicant has experienced that this technical solution is subject to the following limitations.

First of all, even if the tools provided with holes allow to channel the cooling fluid towards the cutting edges, the quantity of cooling fluid that effectively reaches the cutting edges can be minimal, especially if the tool is operating in a blind hole or if there is not enough space for the passage of big cooling fluid flow rates between the holes of the tools and the inner wall of the blind hole.

A further limitation is constituted by that fact that, at most, the cooling fluid only touches a part of the tool where the cutting edges are present, but not the rest of the tool, which is not therefore subjected to be being cooled, resulting in that different parts of the tool can be of a different temperature.

Another inconvenient of the known solutions consists in the fact that the holes for the passage of the cooling fluid are obtained in the body of the tool, therefore by removing material and weakening the tool itself. Generally, the holes are obtained at the axis of rotation of the tool. In the most extreme solutions, a cooling hole can constitute a breaking zone of the tool.

The limited availability of sections and center to center distances due to physical and structural limitations of the products on the market prevents or precludes a tool designer from selecting the number of teeth, pitch and pattern of the cutting edges. In practice, this aspect implies the need of tool manufacturers to acquire raw materials from different manufacturers so that to be able to cover a wide range of combinations with respect to the diameter and center to center distance of the lubricating holes.

It should also be considered that it is impossible to obtain holes for the passage of cooling fluid in tools having diameter of less than 4 mm, even if the need to effectively cool the cutting edges still persists.

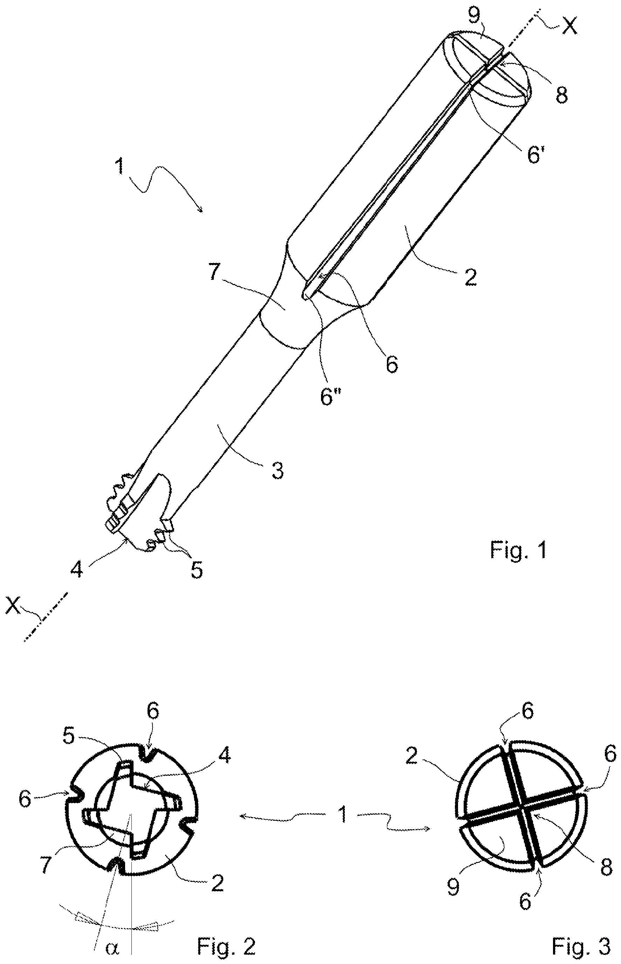

US 2014/0212234 describes a cutting tool according to the preamble of claim 1. In particular, there are one or more cutting edges on the bit of the tool and the tool is intended to rotate on a longitudinal axis. Surface grooves, parallel to the longitudinal axis of rotation, are present on the outer surface of the shank for distributing a lubricating fluid on the bit of the tool. The surface grooves have constant width (reference 21a in figure 1, paragraph 197).

US 2003/0095841 and JP-H04-111708 describe similar solutions; the grooves can also have a helical pattern.

The Applicant has experienced that the solutions provided with surface grooves for distributing the cooling/lubricating fluid can be improved in terms of performances, i.e. in terms of the effectiveness of the cooling and/or lubrication of the cutting edges.

### Summary of the Invention

Object of the present invention is therefore to provide a cutting tool and a relative cooling method able to overcome the limitations of the currently available solutions and simultaneously easy to implement, also on already existing tools.

In particular, an object of the present invention is to provide a tool that can be cooled and lubricated without through-holes for the passage of the cooling fluid, in the most effective way with respect to the currently available solutions provided with traditional surface grooves.

A first aspect of the present invention therefore concerns a machine cutting tool according to claim 1.

In particular, the tool comprises a shank and a bit extending cantileverly from the shank. One or more cutting edges are present on the bit and the tool is intended to rotate on a longitudinal axis for the removal of material, for example chips, from a piece being processed, just by the effect of the interaction between the cutting edges and the piece.

The tool according to the present invention is provided with one or more grooves on the outer surface of the shank, which have the function of distributing a cooling and/or lubricating fluid on the bit, and therefore on the cutting edges. The presence of the surface grooves allows to obtain a tool without through-holes, and to simultaneously and effectively cool and/or lubricate the cutting edges. In fact, the fluid flows along the surface grooves, from which it comes out in jets impinging the cutting edges of the tool during use.

According to the invention, the surface grooves do not have constant width, but they widen towards the bit of the tool. In order words, the final length of the surface grooves, proximal with respect to the bit of the tool, is larger than the initial length of the same grooves, distal with respect to the bit of the tool. This characteristic allows, other conditions being equal, to more effectively direct the fluid jets on the cutting edges with respect to the traditional solutions provided with surface grooves having constant width.

In fact, the jet supplied by a surface groove that widens towards the bit of the tool does not remain parallel to the tool, i.e. to the longitudinal axis, but is inclined just towards the bit of the tool, and this allows to distribute the lubricating and/or cooling fluid on the entire surface of the cutting edges and, in general, on all the bit of the tool.

The lack of through-holes in the tool allows to obtain the utmost mechanical resistance, other conditions being equal.

The distribution of the cooling and/or refrigerating fluid through the surface grooves positioned on the surface of the shank, allows to effectively cool the entire tool, including the shank itself, and also the inner surface of the spindle in which the tool is inserted. This allows to minimize the risks of having the tool slip out of the spindle due to thermal expansions.

The solution suggested is then clearly advantageous whenever the tool is implemented with small diameters smaller than 4-5 mm, since in this case it would anyhow be impossible to drill the tool according to the known art.

Another advantage is constituted by the fact that the pitch, shape, length and width of the surface grooves can be selected by the designer independently of the characteristics of the cutting edges, and at a certain extent, also independently of the geometry of the tool. In fact, the shank is generally a standard portion of the tools, with a generally cylindrical geometry on which there is space for obtaining the surface grooves.

In practice, the surface grooves can also be obtained on already made tools, as a technical update, independently of the manufacturing material and manufacturer, and not only on newly manufactured tools.

Above all, the main advantage of the solution suggested is given by the fact that the jets of cooling and/or lubricating fluid always reach the cutting edges of the tool, independently of the type of process carried out by the tool, as will be better explained henceforth in relation to the accompanying drawings. In fact, the jets coming out through the surface grooves impinge the cutting edges from above and sideways, while in the tools according to the known art, the fluid comes out through the through-hole, or from through-holes if more than one, at the bit of the tool, and must then go back up to reach the cutting edges, but this is not always possible. Effective and constant cooling is therefore achieved over time, all in favor of the productivity and quality of the processes carried out.

The surface grooves can have rectilinear pattern, i.e. can be longitudinal grooves, parallel with respect to the axis of rotation of the tool, or can have helical pattern.

According to the invention, there is a joining portion between the bit and the shank, also defined coning portion, and the surface grooves open at the joining portion.

In the preferred embodiment of the tool, the surface grooves extend between an initial length, at the end of the shank intended to be inserted in a spindle mounted on a machine tool, and a final length at the bit or at the joining portion.

Preferably, the shank has an upper face opposite the bit, and the surface grooves merge together on said upper face. The upper face can be flat, concave or convex.

Preferably, the tool comprises a surface groove for each of the cutting edges.

Preferably, the angle α defined between a surface groove and the respective cutting edge is lower than 30°, for example 15°.

Preferably, the surface grooves each have a concave profile, preferably V-shaped or U-shaped.

In a second aspect, the present invention concerns an assembly comprising a machine tool provided with a spindle that can be supplied with a refrigerating and/or lubricating fluid, and a cutting tool of the type just described. The spindle, together with the shank of the tool operatively inserted in the spindle itself, define a distribution channel of the fluid at each surface groove. The fluid is distributed through such channels and comes out through them towards the cutting edges of the tool.

In its third aspect, the present invention concerns a method for cooling and/or lubricating cutting tool during machining, according to claim 11.

The advantages of the assembly and the method are the ones described above in relation to the tool.

### Brief list of the figures

Further characteristics and advantages of the invention will be better highlighted by the review of the following specification of a preferred, but not exclusive, embodiment illustrated for illustration purposes only and without limitations, with the aid of the accompanying drawings, in which:
- figure 1 is a perspective view of a cutting tool according to the present invention;
- figure 2 is a front view, i.e. from the side of the cutting edges, of the tool shown in figure 1;
- figure 3 is a rear view, i.e. from the shank side, of the tool shown in figure 1;
- figure 4 is a schematic elevation view of a cutting tool according to the known art, during the processing of a through-hole;
- figure 5 is a schematic elevation view of a cutting tool according to the present invention, during the processing of a through-hole;
- figure 6 is a schematic elevation view of a cutting tool according to the known art, during the processing of a blind hole;
- figure 7 is a schematic elevation view of a cutting tool according to the present invention, during the processing of a blind hole;
- figure 8 is a schematic elevation view of a cutting tool according to the known art, while carrying out a threading process from the solid;
- figure 9 is a schematic elevation view of a cutting tool according to the present invention, while carrying out a threading process from the solid;
- figure 10 is a schematic elevation view of a cutting tool according to the known art, having diameter of less than 6 mm, while carrying out a threading process from the solid;
- figure 11 is a schematic elevation view of a cutting tool according to the present invention, having diameter of less than 6 mm, while carrying out a threading process from the solid;
- figure 12 is a schematic elevation view of a cutting tool according to the known art, combined with a shrink-fit spindle of a machine tool;
- figure 13 is a schematic elevation view of a cutting tool according to the present invention, combined with a shrink-fit spindle of a machine tool;
- figure 14 is a picture of a cutting tool according to the known art, mounted on a spindle and supplied with a lubricating and cooling fluid;
- figure 15 is a picture of a cutting tool according to the present invention, mounted on a spindle and supplied with a lubricating and cooling fluid under the same conditions as the tool shown in figure 14.

### Detailed description of the invention

Figures 1-3 show an example of a cutting tool 1 according to the present invention. It is a miller but, as specified in the preceding description, the tool 1 could also be a bit, a reamer, a tapper, a miller, a thread milling cutter, etc.

The tool 1 comprises a shank 2 intended to be restrained by the spindle of a machine tool, and a bit 3 extending cantileverly from the shank 2. Cutting edges 5 are obtained on the distal end 4 of the bit 3. A joining portion 7 is present between the bit 3 and the shank 2, since the shank 2 has a diameter greater than the bit 3. In the examples shown in the figures, the tool 1 has circular section, i.e. the shank 2, the bit 3 and the joining portion 7 have circular section.

The axis of rotation of the tool 1 is denoted by X-X. The term *longitudinal* is herein used to indicate directions, axes or elements developing in parallel to the axis X-X.

Unlike the traditional solutions, the tool 1 does not have through-holes crossing the shank 2 and crossing the bit 3 for supplying the cooling fluid to the distal end 4. On the contrary, the shank 2 and the bit 3 are solid, i.e. devoid of inner discontinuities.

As will be explained in detail in the following description, the cooling of the cutting edges 5 and, in general, of the entire tool 1 is obtained by supplying the cooling fluid in the surface grooves 6 obtained at the outer surface of the shank 2. The surface grooves 6 operate like channels for distributing the cooling fluid, not inside the shank, but outside of it.

In the example shown in the figures, the surface grooves 6 are longitudinal, i.e. they extend with rectilinear pattern in parallel to the axis of rotation X-X, and will now be defined as longitudinal grooves 6 for this reason.

In the example shown in the figures, there are four longitudinal grooves 6 that are joined, i.e. that merge, at the reference numeral 8, on the upper face 9 of the shank 2. Each longitudinal groove 6 opens, at the bottom, at the joining portions 7 between the shank 2 and the bit 3, where the diameter of the tool 1 is becoming smaller.

According to the invention, as shown in the accompanying figures, the longitudinal grooves 6 do not have constant width but widen, i.e. the width at the first length 6' extending from the upper face 9 of the shank 2 is smaller than the width at the final length 6" facing the bit 3. As will be explained later, this arrangement allows to widen the jet of cooling fluid to impinge a largest as possible surface of the bit 3.

In general, for the purposes of the present invention, the tool 1 just has to have at least one longitudinal groove 6.

The α angle, defined between each longitudinal groove 6 and the cutting edge 5 closest to it, is depicted in figure 2. In the example shown in the figures, the α angle is equal to 15°, the tool 1 is 78 mm long, the bit 3 is 35 mm long, the diameter of the bit 3 is equal to 6.75 mm and the diameter of the shank 2 is equal to 12 mm.

In general, regardless of the dimensions of the tool 1, it is preferable that the α angle is lower than 30° for effectively directing a jet of lubricating fluid on the cutting edges 5.

Preferably, as shown in the figures, the tool 1 comprises a longitudinal groove 6 for each of the cutting edges 5, so that the cooling and/or lubricating liquid is effectively supplied to each cutting edge 5.

Preferably, the longitudinal grooves 6 each have a V- or U- profile.

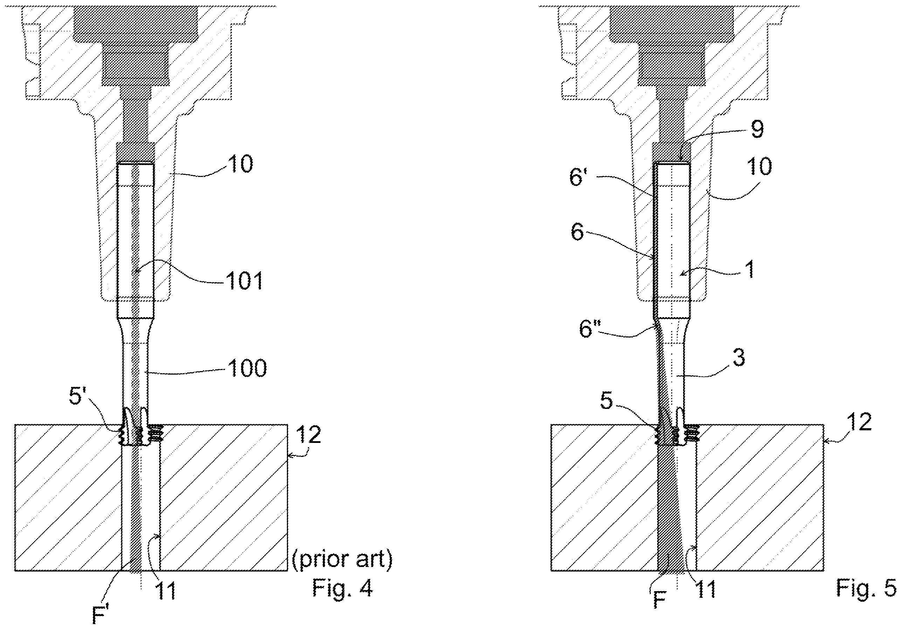

Figure 4 shows a miller 100 according to the known art, mounted on a spindle 10 of a machine tool and provided with a central through-hole 101 in which a lubricating liquid F' flows also with the function of cooling liquid. The miller 100, maintained in rotation on its axis by the spindle 10, is milling a through-hole 11 obtained in a piece 12 being processed. As can be noticed, the liquid F' comes out through the central through-hole 101 and crosses the hole 11 without impinging the cutting edges 5', which are therefore not lubricated and cooled.

Figure 5 shows the tool 1 according to the present invention in the same application as the one described for figure 4, for a quick comparison. As can be noticed: the fluid F flows by exploiting just the longitudinal grooves 6 of the tool 1: at the first length 6', the fluid F is channeled between the shank 2 and the inner surface of the spindle 10 and comes out at the final length 6", opening fan-like and impinging, as shown in figure 5, the bit 3 but especially impinging the cutting edges 5 positioned on the distal end 4. Therefore, other conditions being equal, the tool 1 allows an effective lubrication and a concrete cooling of the cutting edges 5, also when the hole 11 being processed is a through-hole. In fact, the jet of cooling liquid F really impinges the contact area between the cutting edges 5 and the inner surface of the hole 11 being processed. A single jet of fluid F is shown in figure 5, but it must be considered that each of the four longitudinal grooves 6 generates a jet of fluid F and, therefore, the bit 3 is lubricated and cooled by four jets of fluid F that open fan-like.

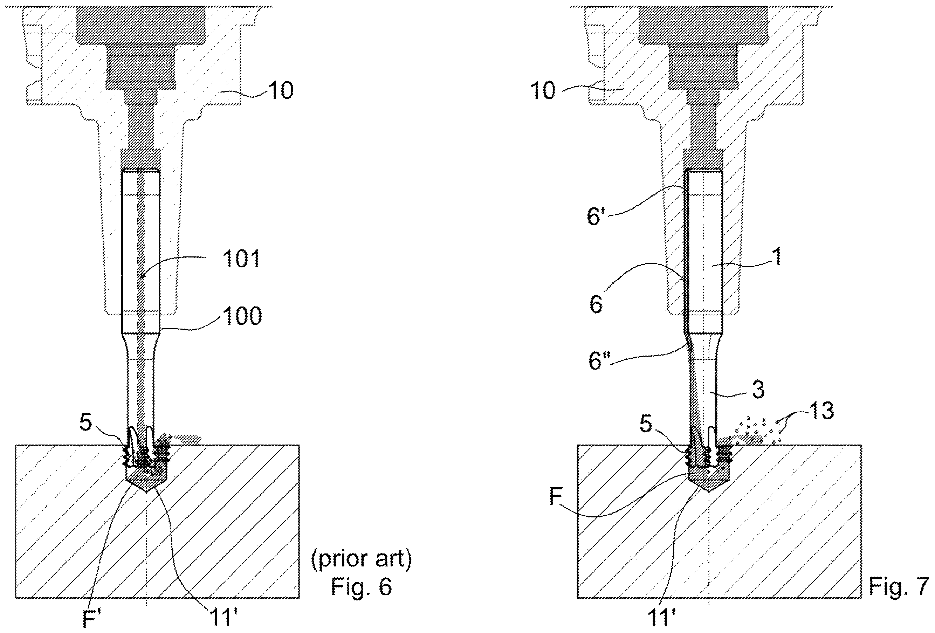

Figure 6 shows a miller 100 according to the known art, mounted on the spindle 10 of a machine tool and provided with a central through-hole 101 in which a lubricating/cooling liquid F' flows. The miller 100, maintained in rotation on its axis by the spindle 10, is threading a blind hole 11' previously obtained in a piece 12 being processed. As can be noticed, the liquid F' comes out through the central through-hole 101 and goes under pressure in the blind hole 11' without staying in it; in fact, the fluid F' impinges against the inner wall of the hole 11' and immediately comes out of the hole 11' itself without significantly cooling the cutting edges 5'.

Figure 7 shows the tool 1 according to the present invention in the same application as the one described for figure 6, for a quick comparison. As can be noticed: the fluid F flows by exploiting just the longitudinal grooves 6 of the tool 1: at the first length 6', the fluid F is channeled between the shank 2 and the inner surface of the spindle 10 and comes out at the final length 6", opening fan-like and impinging, as shown in figure 5, the bit 3 but especially impinging the cutting edges 5 positioned on the distal end 4. Given that the jet of liquid F does not come out under pressure from a central hole, but impinges the contact area between the cutting edges 5 and the inner surface of the hole 11 being processed opening fan-like, it is not immediately deviated outside of the blind hole 11', but remains a sufficient time in the area for cooling and refrigerating the cutting edges 5 and the bit 3 of the tool 1; this is valid for each of the four jets of fluid F coming out through the longitudinal grooves 6. Another advantage is that the jets of fluid F push the chips 13 away from the cutting zone, i.e. away for the cutting edges 5 interacting with the inner wall of the blind hole 11', simply by impinging the cutting edges 5 from above and sideways, and this allows to obtain a more qualitative result.

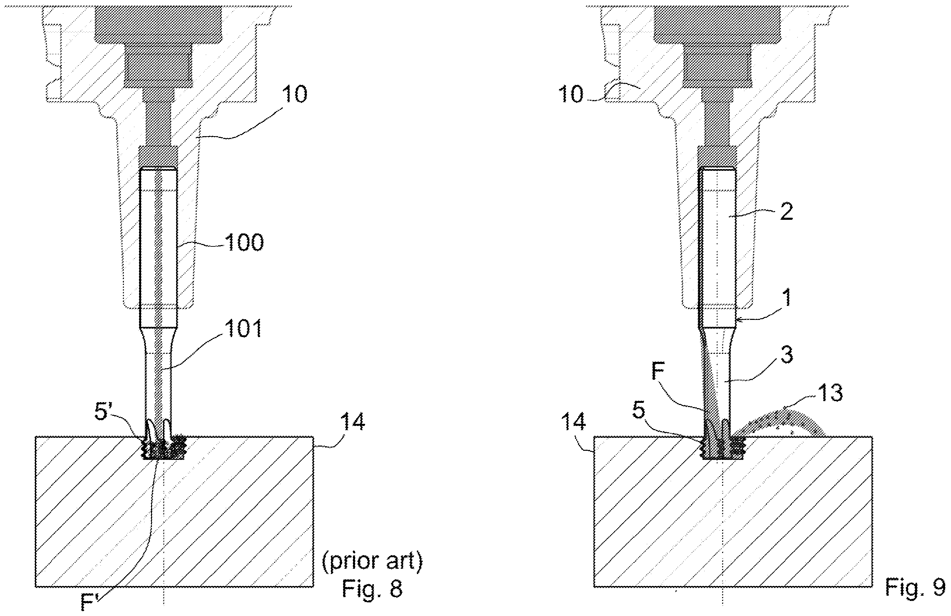

Figure 8 shows a miller 100 according to the known art, mounted on the spindle 10 of a machine tool and provided with a central through-hole 101 in which a lubricating/cooling liquid F' flows. The miller 100, maintained in rotation on its axis by the spindle 10, is threading a piece 14 in which no hole was previously obtained, i.e. it is threading the "bulk" piece. As can be noticed, the liquid F' has difficulties coming out through the central through-hole 101 of the miller 100 because the hole 101 is substantially intercepted by the surface of the piece 14, which acts as a cap and obstructs the hole 101, therefore limiting the coming out of the liquid F'. Therefore, also in this circumstance, the fluid F' is unable to adequately cool the cutting edges 5'. For this reason, in practice, initial hole is generally carried out on the piece 14 to provide sufficient space to the miller 100 and to the liquid F'.

Figure 9 shows the tool 1 according to the present invention in the same application as the one described for figure 8, for a quick comparison. As can be noticed, the fluid F, in virtue of the shape of the longitudinal grooves 6, is able to easily reach the cutting edges 5 with the nominal flow rating, without obstructions from the piece 14. The tool 1 is therefore able to work the piece 14 effectively, also whenever a hole was not previously obtained in the piece 14.

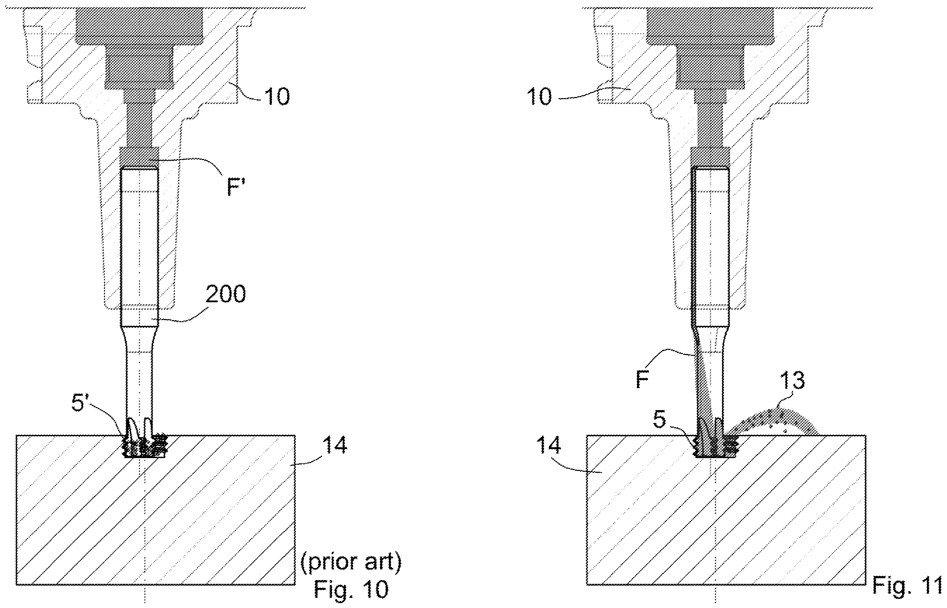

Figure 10 shows another miller 200 according to the known art. It is a miller with small diameter, and more precisely 1.50 mm, also named *micro-miller.* The little dimensions of the miller 200 make impossible to obtain a central through-hole for supplying the fluid F'. Therefore, the miller 200 runs dry or is assisted by an outer lubricating system with respect to the machine, i.e. an outer cooling and lubricating system with respect to the spindle 10.

Figure 11 shows the tool 1 according to the present invention in the same situation as the one shown in figure 10 for the miller 200. Advantageously, the tool 1 can still use the cooling system of the spindle 10, even if the diameter is small, for example equal to 1.50 mm as in the example of figure 10, because no central through-hole is required: the longitudinal grooves 6 effectively channel the fluid F towards the cutting edges 5 from outside of the tool 1 itself. Another advantage is that the lack of a central hole allows to maximize the robustness of the tool 1.

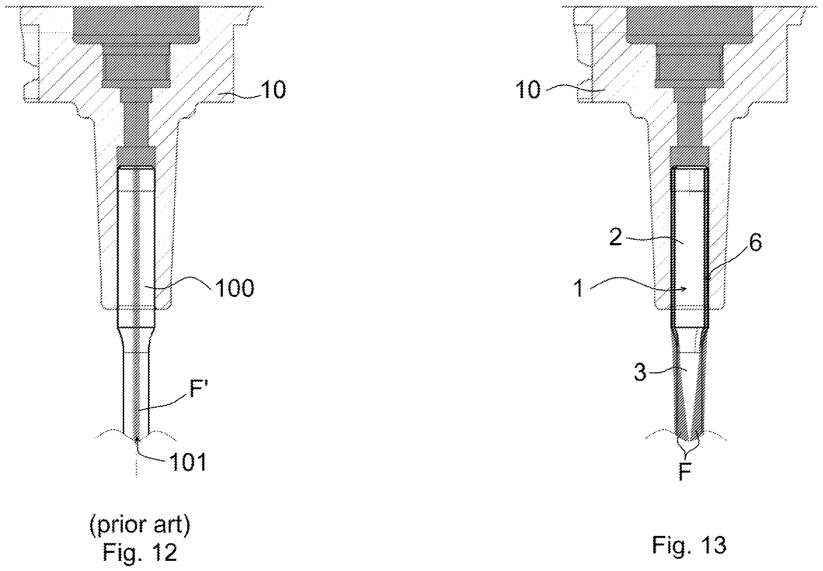

Figures 12 and 13 compare the miller 100 according to the known art with the tool 1 according to the present invention, as far as the general cooling of the assembly of tool and spindle 10 is concerned. In fact, in the traditional miller 100, the fluid F' crosses the hole 101 without interacting with the spindle 10, which is not therefore cooled. Figure 13 shows how the fluid F also interacts with the inner wall of the spindle 10, subtracting heat therefrom, before coming out through the longitudinal grooves 6. This arrangement allows to guarantee a solid coupling between the spindle 10 and the tool 1, useful in reducing or eliminating the risks that the tool 1 can slip out of the spindle 10.

It is important to highlight that the longitudinal grooves 6 can be obtained both in the manufacturing step of new tools 1 and on already existing tools, as an upgrade. In other words, existing tools can also be updated to the solution according to the present invention, quickly and at a low cost, independently of the manufacturer.

As described above in the examples shown in the figures, the surface grooves 6 are rectilinear and longitudinal. In general, however, the tool 1 can also be obtained with grooves 6 with helical pattern on the surface of the shank 2.

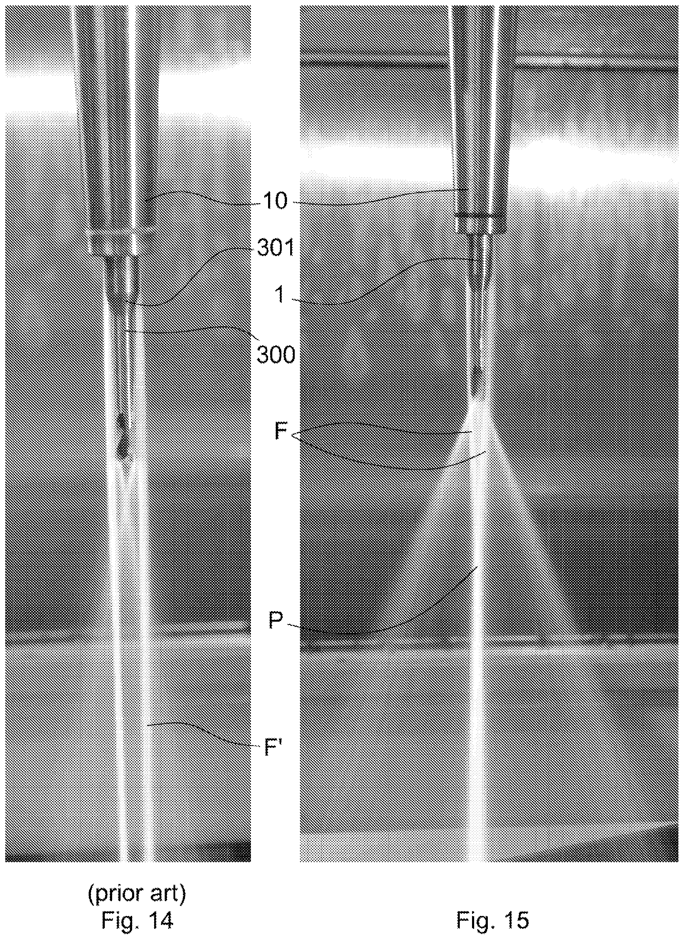

Figure 14 is an elevation picture of a miller 200 according to the known art, mounted on a spindle 10. The miller 200 is shown stationary, but supplied with lubricating and refrigerating fluid. The miller 200 has two cutting edges at the bit. The bit is 25 mm long and its diameter is 3 mm; conicity 301 is provided between the bit and the shank and the maximum diameter of the tool is equal to 6 mm between the bit and the conicity 301. The tool is provided with two longitudinal surface grooves, i.e. straight, having constant length, which are arranged diametrically opposed. The surface grooves are supplied with a lubricating and refrigerating fluid obtained by emulsifying water and oil at 13% by mass. The fluid supply pressure is 19 bars.

As can be noticed, the jets of fluid F' coming out through the surface grooves substantially remain parallel to the tool, and tangent to the cutting edges positioned on its bit.

Figure 15 is an elevation picture of a miller 1 according to the present invention, mounted on a spindle 10 shown in figure 14. The miller 1 is shown stationary, supplied with lubricating and refrigerating fluid. The miller 1 is identical to the miller 300 shown in figure 14, except for the fact that the surface grooves widen in direction of the bit of the miller 1. More in detail, the surface grooves of the two millers 300 (figure 14) and 1 (figure 15) have the same depth and the same initial width; the width is constant in the miller 300 and increases in the miller 1 in the direction of the cutting edges, similarly to the solution shown in figure 1. Also the fluid supply conditions are the same in the two examples shown in the pictures.

As can be noticed, the jets of fluid F coming out through the surface grooves are not parallel to the tool 1, but are inclined with respect to the longitudinal axis of rotation, i.e. are directed just towards the bit, where the cutting edges are present. Consequently the cutting edges, and in general the bit, are impinged by the fluid F in a clearly more effective way with respect to the solution shown in figure 14, under the same conditions. It can also be noticed how the jets of fluid F cross each another downstream from the bit of the miller 1, at the point denoted by the reference P.

## Claims

1. A machine cutting tool (1) comprising a shank (2) and a bit (3) extending from the shank (2), wherein there are one or more cutting edges (5) on the bit (3) and wherein the tool (1) is intended to rotate on a longitudinal axis (X-X), wherein on the outer surface of the shank (2) there are one or more surface grooves (6) distributing a cooling and/or lubricating fluid (F) on the bit (3), wherein the width of the surface grooves (6) is greater at the length closest to the bit (3), i.e. the surface grooves (6) widen towards the bit (3) of the cutting tool (1), **characterized by** a joining or coning portion (7), between the shank (2) and the bit (3), and in that the surface grooves (6) open at the joining portion (7).

2. Cutting tool (1) according to claim 1, wherein the surface grooves (6) have a rectilinear or helical pattern.

3. Cutting tool (1) according to any one of the preceding claims, wherein the shank (2) has an upper face (9) opposite to the bit (3), at which the surface grooves (6) merge together to allow the fluid (F) to pass along the outer surface of the shank (2).

4. Cutting tool (1) according to any one of the preceding claims, comprising a surface groove (6) for each of the cutting edges (5).

5. Cutting tool (1) according to claim 4, wherein the α angle comprised between a surface groove (6) and the respective cutting edge (5) is lower than 30°, preferably equal to 15°.

6. Cutting tool (1) according to any one of the preceding claims, unprovided with through-holes crossing the shank (2) and the bit (3) for supplying the cooling or lubricating fluid (F) to the bit (3).

7. Cutting tool (1) according to any one of the preceding claims, wherein in use, a cooling and/or lubricating fluid (F) can impinge the cutting edges (5) as it comes out through the surface grooves (6).

8. Cutting tool (1) according to any one of the preceding claims, wherein the surface grooves (6) each have a concave profile, preferably V-shaped or U-shaped.

9. Assembly comprising a machine tool provided with a spindle (10) that can be supplied with a refrigeration and/or lubricating fluid (F), and a cutting tool (1) according to any one of the preceding claims, wherein the spindle (10), together with the shank (2) of the tool (1) operatively inserted in the spindle (10), define a distribution channel of the fluid (F) at each surface groove (6), the fluid (F), in use, being distributed through such distribution channels and from the latter it comes out towards the cutting edges (5) of the tool (1).

10. A method for cooling and/or lubricating, during a machining by a machine tool, a cutting tool (1) unprovided with through-holes for supplying a fluid (F) to the cutting edges (5) of the tool (1) itself, comprising:
a) obtaining one or more surface grooves (6) on the outer surface of the shank (2) of the tool (1), wherein the width of the surface grooves (6) is greater in a final length (6") in the proximity of the cutting edges (5) of the tool (1) than the width of the same surface grooves (6) in an initial length (6') upstream from the final length (6"),
b) coupling the tool (1) to the spindle (10) of the machine tool and activating the spindle (10) to rotate the tool (1);
c) supplying a cooling and/or lubricating fluid (F) to the spindle (10) of the machine tool to achieve the fluid (F) distributing along the surface grooves (6) and the fluid (F) coming out through the surface grooves (6) in jets impinging the cutting edges (5) of the tool (1),
wherein there is provided a joining or coning portion (7) between the shank (2) and the bit (3), wherein the surface grooves (6) open at the joining portion (7).

## Patentansprüche

1. Maschinenschneidwerkzeug (1), umfassend einen Schaft (2) und einen sich vom Schaft (2) erstreckenden Kopf (3), wobei eine oder mehrere Schneidkanten (5) auf dem Kopf (3) angeordnet sind und wobei das Werkzeug (1) zur Drehung um eine Längsachse (X-X) bestimmt ist, wobei auf der Außenfläche des Schafts (2) eine oder mehrere Oberflächennuten (6) vorhanden sind, die ein Kühl- und/oder Schmierfluid (F) auf den Kopf (3) verteilen, wobei die Breite der Oberflächennuten (6) in dem dem Kopf (3) nächstgelegenen Längenabschnitt größer ist, d.h. die Oberflächennuten (6) erweitern sich in Richtung des Kopfes (3) des Schneidwerkzeugs (1), **gekennzeichnet durch** einen Anschluss- oder Kegelabschnitt (7) zwischen dem Schaft (2) und dem Kopf (3), und **dadurch, dass** sich die Oberflächennuten (6) an dem Anschlussabschnitt (7) öffnen.

2. Schneidwerkzeug (1) nach Anspruch 1, wobei die Oberflächennuten (6) einen geradlinigen oder schraubenförmigen Verlauf aufweisen.

3. Schneidwerkzeug (1) nach einem der vorangehenden Ansprüche, wobei der Schaft (2) eine dem Kopf (3) gegenüberliegende Oberseite (9) aufweist, an der die Oberflächennuten (6) sich miteinander vereinigen, um den Durchgang des Fluids (F) entlang der Außenfläche des Schaftes (2) zu ermöglichen.

4. Schneidwerkzeug (1) nach einem der vorhergehenden Ansprüche, umfassend eine Oberflächennut (6) für jede der Schneidkanten (5).

5. Schneidwerkzeug (1) nach Anspruch 4, wobei der zwischen einer Oberflächennut (6) und der jeweiligen Schneidkante (5) eingeschlossene α-Winkel kleiner als 30°, vorzugsweise gleich 15° ist.

6. Schneidwerkzeug (1) nach einem der vorhergehenden Ansprüche, das nicht mit Durchgangslöchern versehen ist, die den Schaft (2) und den Kopf (3) durchqueren, um das Kühl- oder Schmierfluid (F) dem Kopf (3) zuzuführen.

7. Schneidwerkzeug (1) nach einem der vorhergehenden Ansprüche, wobei während des Einsatzes ein Kühl- und/oder Schmierfluid (F) die Schneidkanten (5) beim Austreten durch die Oberflächennuten (6) anströmen kann.

8. Schneidwerkzeug (1) nach einem der vorhergehenden Ansprüche, wobei die Oberflächennuten (6) jeweils ein konkaves, vorzugsweise V- oder U-förmiges Profil aufweisen.

9. Anordnung umfassend eine Werkzeugmaschine mit einer mit einem Kühl- und/oder Schmierfluid (F) versorgbaren Spindel (10) und ein Schneidwerkzeug (1) nach einem der vorhergehenden Ansprüche, wobei die Spindel (10), zusammen mit dem in die Spindel (10) funktionsmäßig eingesetzten Schaft (2) des Werkzeugs (1) im Bereich jeder Oberflächennut (6) einen Verteilungskanal für das Fluid (F) definiert, wobei das Fluid (F) im Betrieb durch solche Verteilungskanäle verteilt wird und aus diesen in Richtung der Schneidkanten (5) des Werkzeugs (1) austritt.

10. Verfahren zum Kühlen und/oder Schmieren während einer Bearbeitung durch eine Werkzeugmaschine eines Schneidwerkzeugs (1), das nicht mit Durchgangslöchern zum Zuführen eines Fluids (F) zu den Schneidkanten (5) des Werkzeugs (1) selbst versehen ist, umfassend:
a) Erzeugen einer oder mehrerer Oberflächennuten (6) auf der Außenfläche des Schafts (2) des Werkzeugs (1), wobei die Breite der Oberflächennuten (6) in einem Endabschnitt (6") nahe den Schneidkanten (5) des Werkzeugs (1) größer ist als die Breite derselben Oberflächennuten (6) in einem dem Endabschnitt (6") stromaufwärts gelegenen Anfangsabschnitt (6'),
b) Koppeln des Werkzeugs (1) an die Spindel (10) der Werkzeugmaschine und Aktivieren der Spindel (10) zum Drehen des Werkzeugs (1);
c) Zuführen eines Kühl- und/oder Schmierfluids (F) zu der Spindel (10) der Werkzeugmaschine, um zu erreichen, dass sich das Fluid (F) entlang der Oberflächennuten (6) verteilt und das Fluid (F) durch die Oberflächennuten (6) in Form von Strahlen austritt, die die Schneidkanten (5) des Werkzeugs (1) anströmen,
wobei ein Anschluss- oder Kegelabschnitt (7) zwischen dem Schaft (2) und dem Kopf (3) vorgesehen ist, wobei die Oberflächennuten (6) sich an dem Anschlussabschnitt (7) öffnen.

## Revendications

1. Une machine-outil de coupe (1) comprenant une tige (2) et une mèche (3) s'étendant à partir de la tige (2), dans laquelle il y a un ou plusieurs tranchants (5) sur la mèche (3) et dans laquelle l'outil (1) est destiné à tourner sur un axe longitudinal (X-X), dans laquelle, sur la surface externe de la tige (2), il y a une ou plusieurs rainures superficielles (6) distribuant un fluide de refroidissement et/ou de lubrification (F) sur la mèche (3), dans laquelle la largeur des rainures superficielles (6) est supérieure à la longueur la plus proche de la mèche (3), c.à.d. les rainures superficielles (6) s'élargissent vers la mèche (3) de l'outil de coupe (1), **caractérisée par** une portion de jonction ou conique (7), entre la tige (2) et la mèche (3), et en ce que les rainures superficielles (6) s'ouvrent en correspondance de la portion de jonction (7).

2. Outil de coupe (1) selon la revendication 1, dans lequel les rainures superficielles (6) présentent un dessin rectiligne ou hélicoïdal.

3. Outil de coupe (1) selon l'une quelconque des revendications précédentes, dans lequel la tige (2) présente une face supérieure (9) opposée à la mèche (3), en correspondance de laquelle les rainures superficielles (6) se rejoignent pour permettre au fluide (F) de passer le long de la surface externe de la tige (2).

4. Outil de coupe (1) selon l'une quelconque des revendications précédentes, comprenant une rainure superficielle (6) pour chaque tranchant (5).

5. Outil de coupe (1) selon la revendication 4, dans lequel l'angle α compris entre une rainure superficielle (6) et le tranchant respectif (5) est inférieur à 30°, de préférence égal à 15°.

6. Outil de coupe (1) selon l'une quelconque des revendications précédentes, dépourvu de trous traversants traversant la tige (2) et la mèche (3) pour fournir le fluide de refroidissement ou de lubrification (F) à la mèche (3).

7. Outil de coupe (1) selon l'une quelconque des revendications précédentes, dans lequel, dans l'utilisation, un fluide de refroidissement et/ou de lubrification (F) peut affecter les tranchants (5) puisque qu'il sort par les rainures superficielles (6).

8. Outil de coupe (1) selon l'une quelconque des revendications précédentes, dans lequel les rainures superficielles (6) présentent chacune un profil concave, de préférence en forme de V ou en forme de U.

9. Ensemble comprenant une machine-outil pourvue d'un mandrin (10) pouvant être alimenté avec un fluide de refroidissement et/ou de lubrification (F), et d'un outil de coupe (1) selon l'une quelconque des revendications précédentes, dans lequel le mandrin (10) ainsi que la tige (2) de l'outil (1) insérée de manière opérationnelle dans le mandrin (10) définissent un canal de distribution du fluide (F) en correspondance de chaque rainure superficielle (6), le fluide (F), dans l'utilisation, étant distribué à travers tels canaux de distribution et ressort de ceux-ci vers les tranchants (5) de l'outil (1).

10. Une méthode de refroidissement et/ou de lubrification, lors d'un usinage par une machine-outil, un outil de coupe (1) dépourvu de trous traversants pour fournir un fluide (F) aux tranchants (5) de l'outil (1) lui-même, comprenant:
a) obtenir une ou plusieurs rainures superficielles (6) sur la surface externe de la tige (2) de l'outil (1), dans laquelle la largeur des rainures superficielles (6) est supérieure, dans une partie finale (6") en proximité des tranchants (5) de l'outil (1), à la largeur des mêmes rainures superficielles (6) dans une partie initiale (6') en amont de la partie finale (6"),
b) associer l'outil (1) à le mandrin (10) de la machine-outil et activer le mandrin (10) pour faire tourner l'outil (1);
c) fournir un fluide de refroidissement et/ou de lubrification (F) à le mandrin (10) de la machine-outil pour obtenir la distribution du fluide (F) le long des rainures superficielles (6) et la sortie du fluide (F) à travers les rainures superficielles (6), en jets affectant les tranchants (5) de l'outil (1),
dans laquelle une portion de jonction ou conique (7) est prévue entre la tige (2) et la mèche (3), dans laquelle les rainures superficielles (6) s'ouvrent en correspondance de la portion de jonction (7).
